# EUROPEAN PATENT APPLICATION

(11) **EP 0 538 992 A1**
(43) Date of publication of application: **28.04.1993**
(21) Application number: 92307042.9
(22) Date of filing: 03.08.1992
(51) Int. Cl.: B29C 67/22

(54) **Sealed cover for a foam body**

(30) Priority: 21.10.1991 US 779870
(71) Applicant: HOOVER UNIVERSAL INC., Plymouth, Michigan 48170 (US)
(72) Inventor: Smith, Sandra L., Waterford, Michigan 48328 (US)
(74) Representative: Senior, Alan Murray

(57) **Abstract**

A sealed cover member is disclosed for use with a foam body that is formed using a pour in place process in which a liquid foaming agent is poured into the cover. To prevent leakage of the liquid foam through the cover at the stitching or seams in the cover, a foam tape is placed on the interior side of the seam and sewn to the cover by the thread whereby the foam tape seals around the thread to prevent leakage of the liquid.

## Description

### BACKGROUND AND SUMMARY OF THE INVENTION

The present invention relates to a cover for a foam body and is particularly related to a cover for a foam body in which the foam body is molded utilizing a pour in place process where a liquid foaming agent is poured into a cover forming the foam body therein.

A pour in place process, as shown in U. S. Patent No. 4,860,415, commonly assigned and herein incorporated by reference, has been successfully used in the manufacture of foam bodies such as seat cushions, seat backs, arm rests and head rests for automotive seat assemblies. In such a process, the cushion is formed by first manufacturing the cover for the foam body. The cover is subsequently placed into a mold and a liquid foaming agent is poured into the mold to form the foam body and bond it to the cover. However, special processing must be undertaken to prevent leakage of the liquid foaming agent. With permeable cover materials, the foam may leak through the cover damaging the exterior of the cover. To prevent leakage, a thin foam slab is laminated to the interior surface of the cover material. The liquid foam is only able to penetrate a small distance into the foam slab, whereby leakage through the cover is precluded.

With vinyl, leather or other impermeable cover materials, the only leakage occurs at the seams where the cover material is punctured during sewing. To avoid leakage at the seams, the same slab foam used with permeable covers has been laminated to the impermeable cover material. The slab foam and the lamination process are expensive and time consuming considering that the vast majority of the foam covers the impermeable cover at a point where leakage will not occur.

Accordingly, it is an object of the present invention to provide a simple and economical means of preventing foam leakage through the needle holes in a cover used for a pour in place foam body without laminating a foam slab to the entire cover when leak protection is not needed over the entire cover.

With the present invention, when the cover is sewn together, a sealing member, such as a foam tape, is sewn to the interior side of the cover by the thread forming the seam. The elastic foam seals around the thread and puncture holes formed by the sewing machine needle to prevent leakage of the liquid foaming agent.

Further objects, features and advantages of the invention will become apparent from a consideration of the following description and the appended claims when taken in connection with the accompanying drawings.

### BRIEF DESCRIPTION OF THE DRAWINGS

Figure 1 is a perspective view of a seat assembly head rest with a sealed cover of the present invention;
Figure 2 is a perspective view of a portion of the cover of the present invention showing a sealed seam;
Figure 3 is a perspective view of an alternative embodiment of the cover of the present invention;
Figure 4 is a perspective view of another alternative embodiment of the cover of the present invention;
Figure 5 is a perspective view of yet another alternative embodiment of the cover of the present invention; and
Figure 6 is a perspective view of a decorative stitch sewn in the cover.

### DETAILED DESCRIPTION OF THE INVENTION

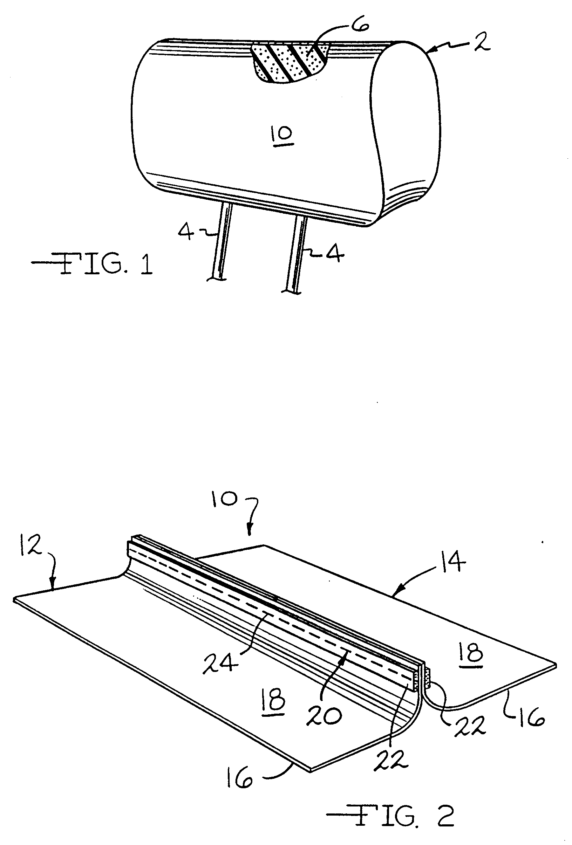

A seat assembly head rest 2 shown in Figure 1 has a sealed seat cover 10 according to the present invention. The head rest is manufactured by sewing the cover 10 together from a plurality of pieces of a sheet material. The cover 10 is then placed in a mold together with a head rest frame including the support posts 4. A liquid foaming agent is then poured into the cover 10 which cures to form the foam body 6 within the cover 10

A portion of the cover 10 of the present invention is shown in Figure 2. The seam 20 in cover 10 is formed when two or more layers of cover material, layers 12 and 14, are sewn to one another. The two layers of cover material each have an exterior surface 16, (facing downward), and an interior surface 18. In the finished seat cover, the exterior surface 16 will be exposed while the interior surface is permanently bonded to the subsequently molded foam body.

When sewing the two layers 12 and 14 together, the layers are positioned with the exterior surfaces 16 facing one another. In this position the two layers are fed through a sewing machine forming the seam 20. According to the present invention, at the time the seam is sewn, a sealing member such as a foam tape 22 is applied to the interior side of both layers to seal the seam.

A completed cover 10 is placed into a mold and the interior of the cover is filled with a liquid foaming agent that subsequently cures to form a foam body therein. The foam tape 22 forms a gasket around the thread 24 to block the needle holes formed in the cover material to prevent foam leakage therethrough. The seam, having the foam tape to prevent leakage, is useful with any impermeable material where leak protection is only needed around the needle puncture holes.

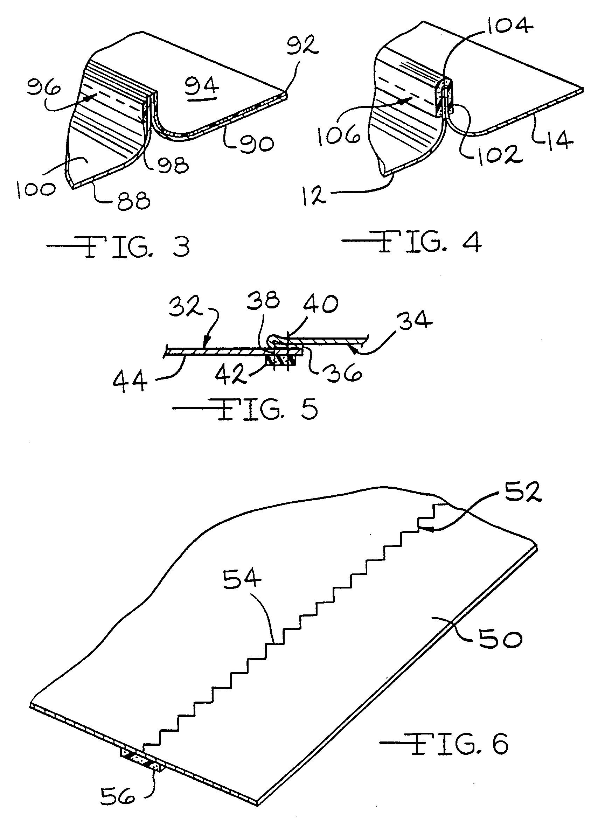

An alternative embodiment of the sealed seam is shown in Figure 3. In this embodiment, an impermeable cover material 88, such as vinyl, is sewn to a permeable cover material 90. Because the cover material 90 is permeable, the interior surface of the cover material 90 has been laminated with a thin foam slab 92 as discussed previously. Because the thin foam slab will form a seal around the seam, it is not necessary to attach a seal member to the interior surface 94 of the cover material 90 at the seam 96. To form the necessary seal about the seam 96, only a single foam tape 98 is used which is applied to the interior surface 100 of the impermeable cover material 88.

Figure 4 shows yet another embodiment of the sealed seam in which, instead of using a pair of seal members with one along each side of the seam, the seam is sealed with a single binding 102. The binding is wrapped over the edge 104 of the two layers of cover material 12 and 14, sandwiching the cover material layers therebetween, and sewn to the cover materials forming a seal about the seam 106.

Figure 5 is yet another alternative embodiment of the seam in which cover layers 32 and 34 are joined together with a double stitch to form a finished seam. The end 36 of layer 34 is folded over after the first thread 38 is sewn through the two layers. Afterwhich, a second thread 40 is sewn through the two layers to provide a double stitched seam. A foam tape 42 is attached to the interior surface 44 of the layer 32. Foam tape 42 seals around the threads 38 and 40 to prevent leakage of the liquid foam through the thread holes.

Figure 6 discloses an alternative embodiment of the present invention wherein the foam tape is used to seal a decorative stitch in the cover member. A cover material 50 includes a decoratively sewn stitch 52 formed by thread 54 which can be sewn in a variety of decorative patterns such as embroidery, etc. In order to prevent leakage of the liquid foaming agent, a foam tape 56 is sewn onto the interior side of the layer 50 by the thread 54 to seal around the thread 54 and prevent leakage of the liquid foaming agent.

The present invention thus provides a sealed cover for use with a pour in place foam body that is simple and economical to form and eliminates the need for laminating a foam slab over the entire interior surface of the cover.

It is to be understood that the invention is not limited to the exact construction or method illustrated and described above, but that various changes and modifications may be made without departing from the spirit and scope of the invention as described in the following claims.

## Claims

1. A sealed cover for a foam body made by pouring a liquid foaming agent into said cover comprising:
at least one layer of a sheet material having an interior surface for contact with the liquid foaming agent;
a thread sewn through said sheet material forming puncture holes in said sheet material; and
a sealing member disposed on the interior surface of said sheet material and sewn to said sheet material by said thread whereby said sealing member forms a gasket around said thread on said interior surface of said sheet material to seal the puncture holes in said sheet material to prevent leakage of the liquid foaming agent through the puncture holes.

2. The cover of Claim 1 wherein said sealing member is an open cell foam.

3. The cover of Claim 1 comprising at least two layers of sheet material and said thread being used to form a seam attaching two of said layers together.

4. The cover of Claim 3 comprising one of said sealing members on the interior side of each of said layers at said seam.

5. The cover of Claim 3 wherein said seam is adjacent an edge of said two layers and said sealing member is a binding tape folded over the edge of said two layers and sewn to the interior surface of both of said layers.

6. A sealed cover for a foam body made by pouring a liquid foaming agent into said cover comprising:
two layers of a sheet material having interior surfaces in contact with the foaming agent;
a thread sewn through said layers forming a seam to join said layers together; and
a seal member disposed on the interior surface of one of said layers and joined to said one layer by said thread whereby said seal member forms a gasket around said thread on said interior surface of said sheet material to seal the thread holes through said one layer to prevent leakage of the liquid foaming agent through said thread holes.

7. The cover of Claim 6 wherein said seal member is an open cell foam.
